(19) Europäisches Patentamt
European Patent Office
Office européen des brevets

(11) **EP 1 705 353 B1**

(12) **EUROPEAN PATENT SPECIFICATION**

(45) Date of publication and mention
of the grant of the patent:
**22.08.2012 Bulletin 2012/34**

(51) Int Cl.:
*F02D 35/02* (2006.01)      *F02D 41/14* (2006.01)
*F02D 41/18* (2006.01)

(21) Application number: **06110557.3**

(22) Date of filing: **01.03.2006**

(54) **Method and device for estimating the inlet air flow in a combustion chamber of a cylinder of an internal combustion engine**

Vorrichtung und Verfahren zur bewertung der Einlassluftmenge in einer Brennkammer einer Brennkraftmaschine

Dispositif et procédé d'estimation du flux d'air entrant dans la chambre de combustion d'un cylindre d'un moteur à combustion interne

(84) Designated Contracting States:
**DE FR GB IT**

(30) Priority: **04.03.2005 EP 05425121**

(43) Date of publication of application:
**27.09.2006 Bulletin 2006/39**

(73) Proprietor: **STMicroelectronics Srl**
**20864 Agrate Brianza (IT)**

(72) Inventors:
 • **Taglialatela-Scafati, Ferdinando**
  **80014, Giugliano (IT)**

 • **Cesario, Nicola**
  **80013, Casalnuovo di Napoli (IT)**
 • **Cassese, Pasquale**
  **80034, Marigliano (IT)**

(74) Representative: **Pellegri, Alberto et al**
**Società Italiana Brevetti S.p.A.**
**Via Carducci, 8**
**20123 Milano (IT)**

(56) References cited:
 **DE-U1- 29 923 272      US-A- 4 920 789**
 **US-A- 4 962 739      US-A- 5 140 850**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE INVENTION

This invention relates to internal combustion engines and more particularly to a method and relative device for sensing the inlet mass air flow (briefly MAF) in a cylinder of an internal combustion engine, and a relative control system that uses this sensing device.

BACKGROUND OF THE INVENTION

In the feedforward part of SI (Spark Ignition) engine Air/Fuel control system, the in-cylinder mass air flow rate has to be accurately estimated in order to determine the fuel amount to be injected. Generally, this evaluation is performed either with a dedicated sensor (MAF sensor) or with an indirect evaluation based on the speed-density method.

In order to meet the stricter and stricter emission regulations, automobile gasoline engines are equipped with a three way catalytic converter (TWC). A precise control of air-fuel ratio (A/F) to the stoichiometric value is necessary to achieve a high efficiency of the TWC converter in the conversion of the toxic exhaust gases (CO, NOx, HC) into less harmful products ($CO_2$, $H_2O$, $N_2$). Typically, this control is performed in a spark-ignition engine through a so-called lambda sensor. The lambda sensor generates a signal representative of the value of the ratio

$$\lambda = \frac{Air/Fuel}{Air/Fuel_{stoichiometric}}$$

from the amount of oxygen detected in the exhaust gas mixture. If $\lambda < 1$ the mixture is rich of fuel, while if $\lambda > 1$ the mixture is lean of fuel.

In order to keep the air/fuel ratio (AFR) as close as possible to unity, the lambda sensor is inserted in the outlet of exhaust gases for monitoring the amount of oxygen in the exhaust gases. The signal generated by the lambda sensor is input to the controller of the engine that adjusts the injection times and thus the fuel injected during each cycle for reaching the condition $\lambda = 1$.

Traditional Air/Fuel control strategies are composed by a feed-forward part in which the amount of fuel to be injected is calculated on the basis of the in-cylinder mass air flow and a feedback part which uses the signal of an oxygen sensor (lambda sensor), located in the exhaust system, to ensure that the Air/Fuel will remain in the neighborhood of the stoichiometric value [1].

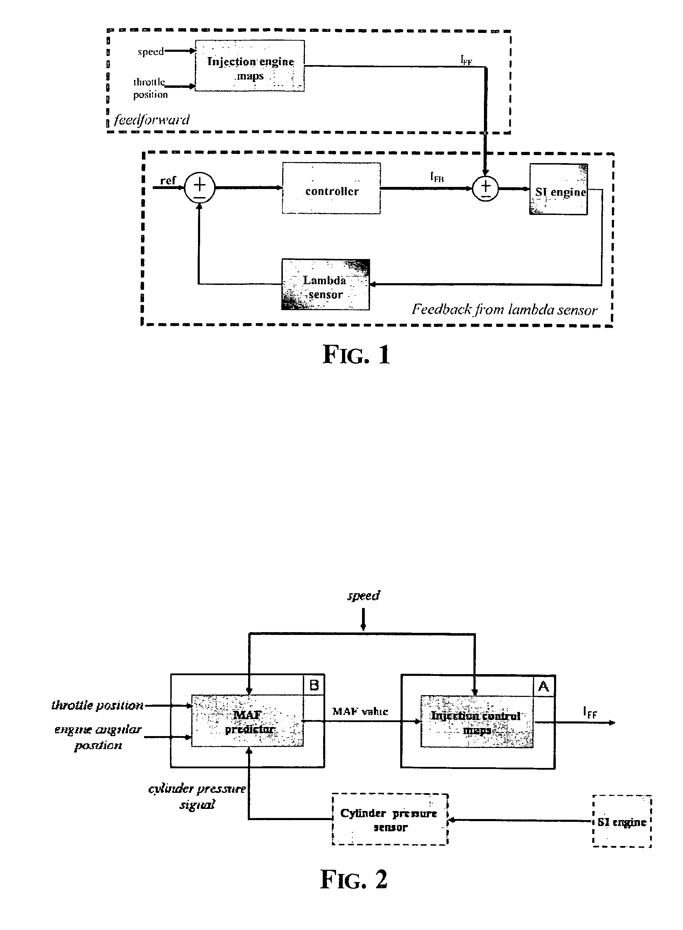

Figure 1 shows a block diagram of a traditional Air/Fuel control system. Generally, the feedback part of the Air/Fuel control system is fully active only in steady-state conditions; moreover the lambda sensor signal is available only after that this sensor has reached a fixed operating temperature. In transient and cold start conditions the feedback control is disabled, thus the feedforward part of Air/Fuel control is particularly important.

As mentioned before, the air flow estimation is the basis for calculating the injected fuel quantity in the feed-forward part of Air/Fuel control system.

A conventional technique [1] for estimating the cylinder air flow into a SI (Spark Ignition) engine involves the so-called "speed-density" equation:

$$\dot{m}_{ap} = \eta(p_m, N) \cdot \frac{V_d \cdot N \cdot p_a}{120 \cdot R \cdot T_m}$$

where $\dot{m}_{ap}$ is the inlet mass air flow rate, $V_d$ is the engine displacement and $N$ is the engine speed; $T_m$ and $p_m$ are the mean manifold temperature and pressure and $\eta$ is the volumetric efficiency of the engine. This is a nonlinear function of engine speed ($N$) and manifold pressure ($p_m$), that may be experimentally mapped in correspondence of different engine working points.

A standard method is to map the volumetric efficiency and compensate it for density variations in the intake manifold.

One of the drawbacks in using the "speed-density" equation for the in-cylinder air flow estimation is the uncertainty in the volumetric efficiency. Generally, the volumetric efficiency is calculated in the calibration phase with the engine under steady state conditions. However variations in the volumetric efficiency due, for example, to engine aging and wear, combustion chamber deposit buildup etc., may induce errors in the air flow estimation.

Moreover, the low-pass characteristic of commercial sensors (Manifold Absolute Pressure or MAP sensors) used for the determination of the manifold pressure $p_m$, makes the signal affected by a delay which, during fast transients, introduces a relevant error in the air flow estimation.

This problem is not solved by using a faster sensor: in this case the sensor captures also pressure fluctuations due to the valve and piston motion [2]. In engines equipped with an EGR (Exhaust Gas Recirculation) valve, the MAP (Manifold Absolute Pressure) sensor cannot distinguish between fresh air and inert exhaust gas in the intake manifold. Therefore, in this case the speed-density equation (1) cannot be used and the air charge estimation algorithm must provide a method for separating the contribution of recalculated exhaust gas to the total pressure in the intake manifold [4].

An alternative method for the air charge determination is to use a Mass Air Flow (MAF) sensor located upstream from the throttle body, which measures directly the inlet air flow. The main advantages of a direct air flow measurement are [1]:

- automatic compensation for engine aging and for all factors which modify engine volumetric efficiency;

- improved idling stability;

- lack of sensibility to the system to EGR (Exhaust Gas Recirculation) since only fresh air flow is measured.

Anyway, air flow measurement by means of a MAF sensor (which is generally a hot wire anemometer) accurately estimates the flow in the cylinder only in steady state, while in transients the intake manifold filling/empting dynamics play a significant role [3], [5]. Moreover, a MAF sensor for commercial automotive applications has a relatively high cost compared to the cost of MAP (Manifold Absolute Pressure) sensor used in the "speed density" approach.

SUMMARY OF THE INVENTION

A reliable alternative method of sensing the inlet air flow in a combustion chamber of a cylinder of an internal combustion engine without using a relatively costly sensor of the prior art and a relative sensing device that implements the method have been found. According to the present invention, the inlet air flow is assessed with soft-computing techniques basically exploiting a combustion pressure signal generated by a common pressure sensor installed in the cylinder.

The applicants have found that there exists a close correlation between the internal cylinder pressure and the inlet mass air flow of the cylinder and thus the former may be used for estimating the latter. The function of the rather expensive inlet mass air flow sensors that are actually deployed in internal combustion engines may be conveniently done by a far less expensive sensing device of this invention, without loss of precision and with a significant reduction of costs.

The sensing device of this invention may be used for realizing a feedforward controller and a feedback-and-feedforward controller of an internal combustion engine.

By juxtaposing a plurality of feedback-and-feedforward controllers of the invention, one for each cylinder of the engine, it is possible to control the inlet air/fuel ratio of each cylinder of a multi-cylinder internal combustion engine.

The method of this invention may be carried out by a software code executed by a computer.

The invention is defined in the annexed claims.

**BRIEF DESCRIPTION OF THE DRAWINGS**

Preferred embodiments of the invention will be described referring to the attached drawings, wherein:

**Figure 1** shows a block diagram of the traditional air/fuel control system for a gasoline engine;
**Figure 2** is a block diagram of the feedforward control system of this invention;
**Figure 3** is a block diagram of a preferred embodiment of the mass air flow sensor of this invention;
**Figure 4** depicts the Yamaha single cylinder four strokes engine YP125 used for tests carried out by the applicant;
**Figure 5** is a graph of simulations of the mass air flow sensor of this invention for different functioning conditions of the Yamaha engine YP125 compared with the values sensed by a known mass air flow sensor in the same conditions;
**Figure 6** is an enlarged view of a portion of the graphs of Figure 5;
**Figure 7** compares the graphs of the mass air flow determined by the sensor of this invention and by a known sensor in function of the crank angle when the engine is running at 4600 rpm and the throttle is by 70% open;
**Figure 8** compares the graphs of the mass air flow determined by the sensor of this invention and by a known sensor in function of the crank angle when the engine is running at 4600 rpm and the throttle is by 20% open;

**Figure 9** compares the graphs of the mass air flow determined by the sensor of this invention and by a known sensor in function of the crank angle when the engine is running at 5800 rpm and the throttle is by 100% open;

**Figure 10** compares the graphs of the mass air flow determined by the sensor of this invention and by a known sensor in function of the crank angle when the engine is running at 5800 rpm and the throttle is by 30% open;

**Figure 11** compares the graphs of the mass air flow determined by the sensor of this invention and by a known sensor at 300 rpm during fast transient conditions varying the throttle opening from 0% to 100% and vice versa.

## DESCRIPTION OF SEVERAL EMBODIMENTS OF THE INVENTION

A soft computing mass air flow estimator of this invention, capable of estimating both in steady state and in transient conditions the in cylinder mass air flow of a single-cylinder SI engine, basically utilizes a combustion pressure signal of the cylinder. A learning machine, such as for example a MLP (Multi-Layer Perceptron) neural network, trained on the experimental data acquired in different operating conditions of a gasoline engine, was used for realizing the inlet mass air flow sensing device of this invention.

A traditional combustion pressure piezoelectric transducer, or any other low-cost pressure sensor, may provide the required raw information. It has been found that the cylinder combustion pressure is correlated with the inlet mass air flow of the cylinder, thus a signal produced by a combustion pressure sensor is exploited for producing through a soft-computing processing that utilizes information on throttle opening, speed and angular position, a signal representative of the inlet mass air flow.

## SYSTEM DESCRIPTION

A block diagram of the novel system of air charge estimation in a single-cylinder SI engine is shown in Figure 2.

Basically, the system is composed by a MAF estimator device of this invention, which basically is a model able to estimate the mass air flow in function of certain parametric features derived from the combustion pressure sensor. The output signal of the MAF estimator is used by an engine management system that uses look-up tables that map working points of the engine ("engine maps") in order to determine the right width of the injection pulse (i.e. $I_{FF}$) that produces the desired air/fuel ratio.

## MASS AIR FLOW ESTIMATOR

Correlations between certain features, recognizable by analyzing the in-cylinder pressure signal and the mass air flow values measured by a real MAF sensor were verified.

As shown in Figure 2, the MAF estimator block has the following inputs:

- throttle position, that is, the signal coming from the sensor that monitors the throttle opening;

- speed, that is, the engine speed, commonly evaluated from the signal of a phonic wheel;

- engine angular position, generally evaluated from the signal of a phonic wheel and the signal coming from a phase sensor;

- cylinder pressure signal, that is the signal coming from a combustion pressure sensor.

The output of the MAF estimator block is an estimated value of the mass air flow in a common scale (e.g. [kg/h]). From a mathematical point of view, the MAF estimator block can be described as a learning machine trained to emulate the way of functioning of a common MAF sensor. A learning machine [8], [10], is a model without a structured knowledge of the principles ruling the phenomena described by the model. In other words, a learning machine represents a model which is able to learn only from the data describing the system functionalities, that is, the input-output couples related to the system, operating in different states.

For example, the learning machine disclosed in the European Patent application N˚ 05425121.0, in the name of the same Applicant may be used.

For carrying out simulations, a MLP (Multi-Layer Perceptron) neural network [8] with three inputs and one output has been considered. The choice of all the endogenous parameters of the neural network model, such as the number of hidden layer, the number of neurons for each hidden layer, the type of activation functions, the value of the regularization parameter and so on, should be made for maximizing the "generalized predict capability" of the learning machine (for a more detailed description of this general concept refer to [8, 10]). "Generalized" means that the choice of the endogenous parameters of the model is made to increase the model generalization capability, that is, the capability of predicting unmeasured mass air flow values.

In the present context, such a problem correspond to a minimum searching problem.

The shape of the fitness function that was used is the following:

$$V_0(S_1, S_2, \ldots, S_P) = \frac{1}{N_M} \sum_{i=1}^{N_M} \frac{1}{N} \sum_{k_i=1}^{N} \left[ \lambda_{k_i} - F^i_{(S_1, S_2, \ldots, S_{N_1})}\left(\mathbf{x}^{(k_i)}\right) \right] \quad (24)$$

where

$$N_M = \begin{pmatrix} N + M \\ N \end{pmatrix} \quad (25)$$

Equation (24) is a modification of the "ordinary cross-validation estimate" of endogenous parameters of a neural network (chapter 5 of [8], and [9]) and has also been disclosed in the already cited prior European Patent application N° 05425121.0.

In the above equations, $N_M$ is the number of possible choices of a testing set, composed by N elements, and of a training set, composed by M elements, on a total data set made by (N+M) input-output couples. The index $k_i$ labels the N elements of a testing data set selected by the i-th choice. The output of the neural network model trained on the M input-output couples related to the i-th choice is represented by the symbol $F^i_{(S_1, S_2, \ldots, S_{N_1})}$. The optimal string of the endogenous parameters $(S_1, S_2, \ldots, S_P)$ of the model is the one that minimizes the functional $V_0(S_1, S_2, \ldots, S_P)$. For the minimum searching of this functional, any evolutionary algorithm may be used. For the tests so far carried out by the applicant, the PSOA (Particle Swarm Optimization Algorithm) [11] stochastic searching algorithm has been used.

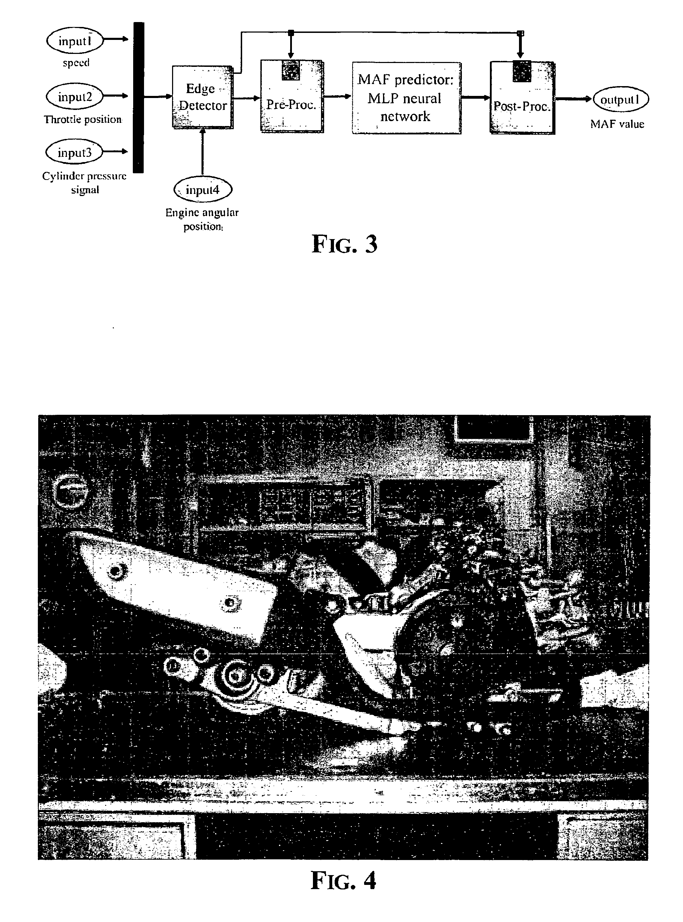

Figure 3 describes the preferred embodiment of the MAF estimator block. The architecture of the MAF estimator is similar to that of the lambda sensor disclosed in the already cited prior European Patent application N° 05425121.0.

The MAF estimator has distinct sub-blocks for properly conditioning the input and output signals of the neural network.

The PRE-PROC sub-block pre-processes the model input data. The input data are transformed in dimensionless data with a zero mean and a unitary variance. Preferably, a PCA (Principal Component Analysis) transform is carried out on the dimensionless data. The POST-PROC sub -block performs the inverse of the previous transforms.

The PRE-PROC sub -block and the POST-PROC sub -block effectively reduce the noise that may be corrupting the output signal of the mass air flow sensor core.

Finally, the EDGE DETECTOR sub -block enables or disables the model prediction according to the values of the input signal INPUT4 (i.e. the engine angular position). In particular, when the engine is at the TDC (Top Dead Center) at the end of the exhaust stroke (i.e. when the intake stroke is starting), the EDGE DETECTOR enables the model function until the engine angular position reaches 140 crank angle before TDC (Top Dead Center) in the compression stroke, when, for the considered test engine, the inlet and exhaust valves are simultaneously closed. This event happens when the inlet air charge reaches its maximum value.

The mass air flow estimated by the model is used for the calculation of the injection pulse for the combustion in the next engine cycle. In other words, the cylinder air charge estimated in the current engine cycle is used to predict the air charge for the next engine cycle. This introduces an inherent delay that becomes important when the engine is in transient conditions.

SET-UP OF THE MAP ESTIMATOR

An MLP neural network was used as model to predict the cylinder mass air flow for different engine conditions. The neural network was trained on an experimental data set including different engine speeds and loads as reported in the following table. In particular, three engine speeds (3000, 4600 and 5800 rpm) and, for each speed, eight throttle positions corresponding to different engine loads, have been considered. Lower engine speeds were ignored because the engine, used for the training of the model and for its validation, was a scooter engine which normally works at high engine speeds. The value of the mass air flow provided by a hot wire anemometer, mounted upstream of the intake

**EP 1 705 353 B1**

manifold, was acquired for each of the twenty four different engine working conditions specified in Table 1.

**Table 1**

|  | Speed (rpm) | throttle position (%) |
|---|---|---|
| 1 | 3000 | 3 |
| 2 | 3000 | 10 |
| 3 | 3000 | 20 |
| 4 | 3000 | 30 |
| 5 | 3000 | 40 |
| 6 | 3000 | 50 |
| 7 | 3000 | 70 |
| 8 | 3000 | 100 |
| 9 | 4600 | 3 |
| 10 | 4600 | 10 |
| 11 | 4600 | 20 |
| 12 | 4600 | 30 |
| 13 | 4600 | 40 |
| 14 | 4600 | 50 |
| 15 | 4600 | 70 |
| 16 | 4600 | 100 |
| 17 | 5800 | 3 |
| 18 | 5800 | 10 |
| 19 | 5800 | 20 |
| 20 | 5800 | 30 |
| 21 | 5800 | 40 |
| 22 | 5800 | 50 |
| 23 | 5800 | 70 |
| 24 | 5800 | 100 |

INJECTION CONTROL MAPS

The inputs of the block INJECTION CONTROL MAPS are the current speed of the engine and the value generated by the mass air flow sensor of this invention. The signal $I_{FF}$ represents the amount of fuel to be injected in the single cylinder of the engine for keeping the Air/Fuel ratio as close as possible to the stoichiometric value. The values of $I_{FF}$ are mapped in a look-up table determined in a preliminary calibration phase of the engine.
In practice, the feedforward control system of this invention varies the amount of fuel to be injected into the combustion chamber of the cylinder of the engine in function of the aspired air flow.

EXPERIMENTAL EQUIPMENT

The engine used both for the training of the mass air flow estimator of this invention and for its validation was a four stroke single cylinder SI engine Yamaha YP125 shown in Figure 4, whose main features are shown in Table 2. The combustion engine in the test bench room was coupled to an asynchronous dynamometer APA 100 with a nominal power of 120 kW.

**Table 2**

| Type | One-cylinder 4 stroke |
|---|---|
| Ignition and Injection System | Electronic |
| Fuel System | Port injection |
| Displacement | 125 cm$^3$ |
| Bore | 53.7 mm |
| Stroke | 54.8 mm |
| Compression Ratio | 10.4 : 1 |
| Max Torque | 10 Nm @ 7500 rpm |
| Max Power | 8.5 kW @ 8750 rpm |

An optical encoder with high resolution (0.2 crank angle) was used for the determination of engine speed and piston position. The optical encoder ensured also the correct timing of the acquired pressure data. The electronic control of the engine was performed with a dSPACE Rapid Prototyping System, in which the engine control maps had been loaded. Using a graphical interface of the dSPACE system, it was possible to change in real time all the engine control parameters. The air charge estimator had been also loaded on the dSPACE system and one of its inputs was the amplified signal coming from a pressure transducer mounted in the cylinder head.

FUNCTIONING OF THE MASS AIR FLOW SENSOR

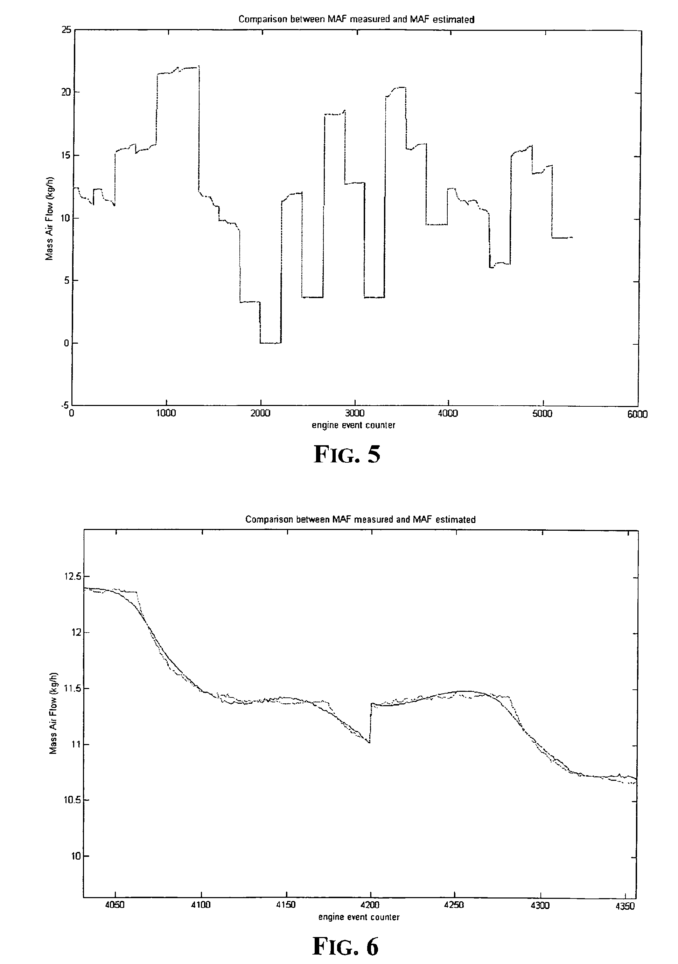

Figure 5 shows graphs of the values generated by the MAF sensor of this invention and a known MAF sensor (debimeter) installed in the same engine. The two graphs practically coincide, demonstrating that the differences between the values generated by the two systems are very small (the percentage mean square difference is smaller than 1%). Figure 6 is an enlarged view of a portion of the graphs of Figure 5, for better highlighting the tiny differences between the two graphs.

EXPERIMENTAL TESTS

Experimental tests were carried out in order to gain information about the model capability to correctly estimate the amount of intake air, both in steady state and in transient conditions. In particular, for a running engine, a real time comparison was made between the output of the model and the value provided by the traditional hot wire anemometer.

RESULTS IN STEADY STATE CONDITIONS

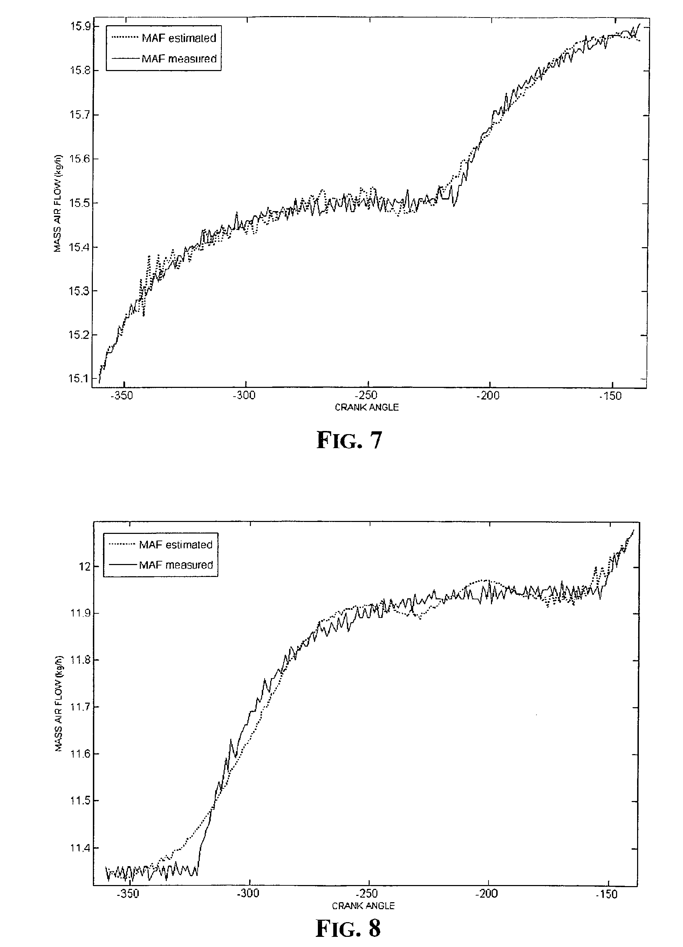

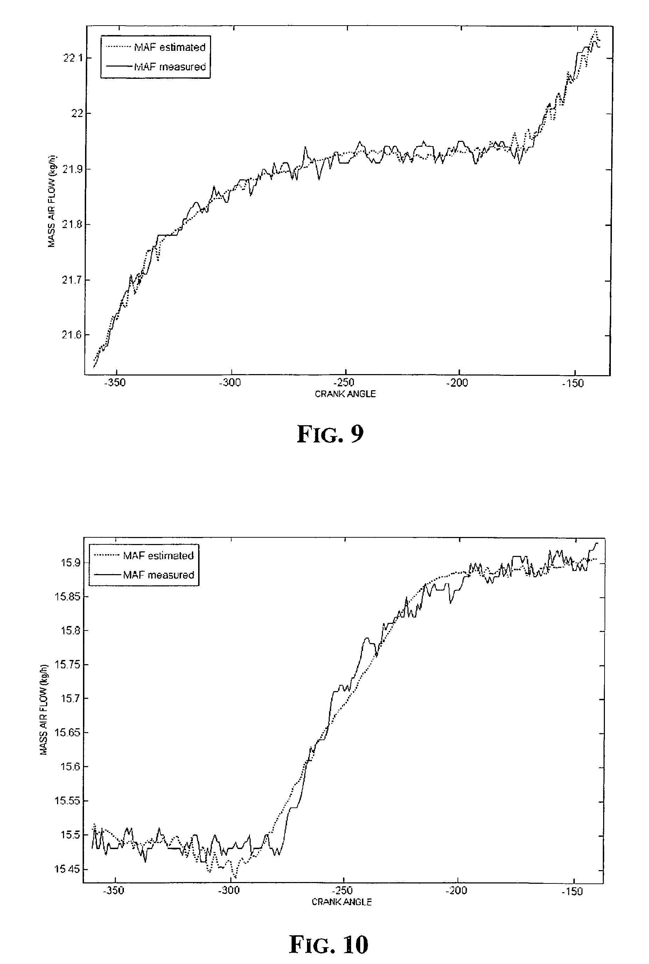

In Figures 7 to 10, comparison graphs of the mass air flow values measured by means of a hot wire anemometer MAF sensor and the mass air flow values estimated by the soft computing estimator of this invention are shown. The figures refer to the engine in steady state run condition and they show the estimated and measured mass air flow for a single engine cycle. In particular, in Figure 7 and in Figure 8, the measured and the estimated mass air flows are compared for an engine speed of 4600 rpm and a throttle opening of 70% and 20% respectively, Figure 9 and the Figure 10 show the comparison at the engine speed of 5800 rpm and a throttle opening of 30% and 100% (wide open throttle condition), respectively.

These results confirm that the model is capable of providing an outstandingly good estimation of the intake air in steady state conditions, with a mean square error lower than 3% for all engine working conditions tested. The mean square error in the mass air flow estimation for each of the specified engine operating conditions is reported in Table 3.

**Table 3**

| Speed (rpm) | Throttle opening (%) | Mean square error |
|---|---|---|
| 4600 | 70 | 0.011 |
| 4600 | 20 | 0.029 |
| 5800 | 100 | 0.015 |
| 5800 | 30 | 0.010 |

RESULTS IN TRANSIENT CONDITIONS

It is well known that under transient conditions, the dynamics of intake manifold filling/empting play a significant role in the cylinder air charge determination. However, the soft computing model, employing the in-cylinder pressure signal as input, which contains information about the actual cylinder air charge, is not very sensitive to these dynamics and provides a good estimation of the intake air flow even during engine transients. At an engine speed of 3000 rpm, fast transient conditions were induced by opening the throttle from close to wide open position and back to the close position. Under these transient conditions, the mass air flow values measured by the hot wire anemometer sensor were acquired for 200 consecutive engine cycles.

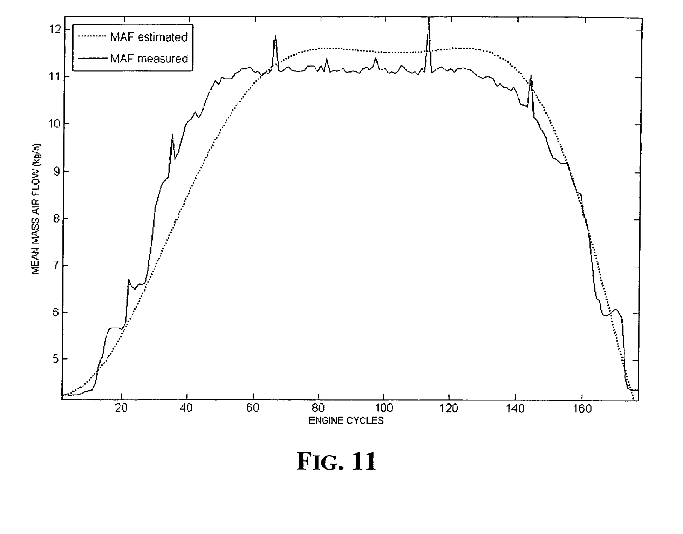

Comparison graphs between the value of the measured mass air flow (average value in the engine cycle) and the value (average value in the engine cycle) of the mass air flow estimated of the soft-computing estimator of this invention are shown in Figure 11.

It may be observed that the measure provided by the physical sensor mounted upstream the intake manifold does not discriminate (compensate) the manifold filling/empting dynamics, thus it may reasonably be regarded as not so accurate in the evaluation of the actual cylinder air charge, during fast transients. This could explain the differences between the values calculated on the basis of the physical sensor of air flow and those estimated according to the present invention.

In particular, according to Figure 11, the mass air flow measurement by the anemometer appears to provide for a faster response to rapid throttle variations than the soft-computing mass air flow estimator of this invention. This appears to confirm that, during transients, the soft-computing mass air flow estimator of this invention intrinsically accounts for the contribution due to the air dynamics in the intake manifold, explaining the differences between the two graphs.

The feedforward control system of this invention may also be used in a feedback-and-feedforward control system such as that depicted in Figure 1, even in conjunction with the virtual lambda sensor disclosed in the cited prior European Patent application N˚ 05425121.0. Such a joint control system would have a relatively low cost and would be capable of determining the amount of fuel to be injected in the combustion chamber of a cylinder in function of both the estimated Mass Air Flow and of the lambda value of the engine.

The soft-computing mass air flow estimator of this invention is capable of providing real time estimation of the cylinder air charge, using a cylinder pressure sensor without the need of a relatively costly physical MAF sensors.

The same in-cylinder pressure sensor [6] [7] could be useful for a hast of other functions in the electronic control of SI engines (e.g. misfire detection, knock detection, Air/Fuel control without lambda sensor, etc., [12], [13], [14], [15]).

Experimental tests on a single-cylinder engine have demonstrated the model effectiveness in estimating the mass air flow in steady state conditions. In transient conditions the model has revealed good but not fully demonstrated satisfactory performances in cylinder air charge estimation. A correct validation of the model even during fast transients will require more specific tests.

The applicants' approach, developed for a single cylinder engine, may be easily extended to SI engines with a plurality of cylinders. In this case, a mass air flow estimator for each cylinder of the engine using the relative combustion pressure signal may be implemented. In this way, even a different Air/Fuel control system for each cylinder of the engine could be implemented.

According to a preferred embodiment of the invention, the lambda sensor may be a virtual lambda sensor of the type described in the cited prior European Patent application N˚ 05425121.0.

REFERENCES

1. Heywood, J.B., - "Internal combustion engine fundamentals" - McGraw -Hill Book Co., 1988.

2. Barbarisi, O., Di Gaeta, A., Glielmo, L., and Santini, S., "An Extended Kalman Observer for the In-Cylinder Air Mass Flow Estimation", MECA02 International Workshop on Diagnostics in Automotive Engines and Vehicles, 2001.

3. Grizzle, J.W., Cookyand, J.A., and Milam, W.P., "Improved Cylinder Air Charge Estimation for Transient Air Fuel Ratio Control", Proceedings of American Control Conference, 1994.

4. Jankovic, M., Magner, S.W., "Air Charge Estimation and Prediction in Spark Ignition Internal Combustion Engines", Proceedings of the American Conference, San Diego, California, June 1999.

5. Stotsky, I., Kolmanovsky, A., "Application of input estimation and control in automotive engines" Control Engineering Practice 10, pp. 1371-1383, 2002.

6. Sellnau, M.C., Matekunas, F.A., Battiston, P.A., Chang, C.F., and Lancaster, D.R., "Cylinder-Pressure-Based Engine Control Using Pressure-Ratio-Management and Low-Cost Non-Intrusive Cylinder Pressure Sensors", SAE paper 2000-01-0932, 2000.

7. Powell, J.D., "Engine control using cylinder pressure: Past, present and future", Journal of Dynamic Systems, Measurement and Control - Vol. 115, n˚ 2B, 1993.

8. Haykin, S., "Neural Networks: A comprehensive Foundation", Prentice Hall International Editions, Piscataway, 1999.

9. Craven, P., and Wahba, G., "Smoothing noisy data with spline functions: Estimating the correct degree of smoothing by the method of generalized crossvalidation", Numerische Mathematik, vol. 31, pag. 377--403, 1979.

10. Vapnik, V.N., "An overview of Statistical Learning Theory", IEEE Trans. On Neural Networks, vol. 9, 1999.

11. Eberhart, R. C. and Kennedy, J. "A new optimizer using particle swarm theory", Proceedings of the sixth international symposium on micro machine and human science pp. 39-43. IEEE service center, Piscataway, NJ, Nagoya, Japan, 1995.

12. Cesario, N., Di Meglio, M., and Pirozzi, F., "Realization of a Virtual Lambda Sensor on a Fixed Precision System", published in IEEE Proceedings of the DATE05 (Design, Automation and Test in Europe) International Conference - Designer's Forum.

13. Pirozzi, F., Cesario, N. and Lavorgna, M., "Modelling On-Off Virtual Lambda Sensors based on Multi-Spread Probabilistic Neural Networks", proposed to the 10th IEEE International Conference on Emerging Technologies and Factory Automation (ETFA05), 19-22 September 2005, Catania, Italy.

14. Cesario, N., Di Meglio, M., Pirozzi, F., Moselli, G., Taglialatela, F., Carpentieri, F., "Air/Fuel Control System in SI Engines based on a Virtual Lambda Sensor", SAE-ICE2005 7-th International Conference On Engine for Automobiles, SAE paper 2005-24-058.

15. Taglialatela, F., Moselli, G. and Lavorgna, M., "Engine Knock Detection and Control Using In-Cylinder Pressure Cycle and Soft Computing Techniques", SAE-ICE2005 2005 7-th International Conference On Engine for Automobiles, SAE paper 2005-24-061.

**DEFINITIONS, ACRONYMS, ABBREVIATIONS**

ATDC:  After TDC
BTDC:  Before TDC
EGR:  Exhaust Gas Recirculation
MAF:  Mass Air Flow
MAP:  Manifold Absolute Pressure
MLP:  Multi Layer Perceptron
PCA:  Principal Component Analysis
PSOA:  Particle Swarm Optimization Algorithm
SI:  Spark Ignition
TDC:  Top Dead Center

**Claims**

**1.** A method of estimating inlet air flow in a combustion chamber of an internal combustion engine, comprising the steps of:

sensing the pressure at least in said combustion chamber of a cylinder of the engine, generating a cylinder pressure signal,

**9**

generating a signal representative of the inlet air flow in said combustion chamber in function of said cylinder pressure signal,

**characterized in that** it comprises the steps of

providing a learning machine realized with soft-computing techniques for generating an output signal in function of at least an input signal;

training said learning machine for reproducing the functioning of a mass air flow physical sensor;

extracting characteristic parameters of said pressure signal;

generating a signal representative of the inlet air flow in said combustion chamber in function of said characteristic parameters using said trained learning machine.

2. The method of claim 1, wherein said learning machine is input with signals representing the position of a throttle of the engine, the speed of the engine, the angular position of the drive shaft of the engine and with said cylinder pressure signal.

3. An estimator of inlet air flow in a combustion chamber of a cylinder of an internal combustion engine, comprising:

a pressure sensor generating a pressure signal of the pressure in at least said combustion chamber of a cylinder of the engine,

**characterized in that** it further comprises

an off-line trained learning machine realized with soft-computing techniques and input at least with said cylinder pressure signal, generating a signal representative of the inlet air flow in said combustion chamber of said engine in function of characteristic parameters thereof and of characteristic parameters of the pressure signal.

4. The estimator of claim 3, wherein said learning machine comprises:

an enabling/disabling unit (EDGE DETECTOR) for enabling the device only when the angular position of the engine is comprised in a certain pre-established range the extreme values of which correspond to the start position and the end position of an aspiration phase;

a pre-processor (PRE-PROC) in cascade to said enabling/disabling unit (EDGE DETECTOR), generating a signal representing a moving average at least of said characteristic parameters of the pressure signal;

a neural network in cascade to said pre-processor, generating an intermediate signal indicative of the inlet air flow;

a post-processor (POST-PROC) input with said intermediate signal, generating said signal representative of estimated inlet air flow of said cylinder as a moving average of said intermediate signal.

5. The estimator of claim 4, input with signals representing the speed of the engine, the position of a throttle, the angular position of the engine and the cylinder pressure signal, said pre-processor (PRE-PROC) further generating signals representing moving averages of said speed of the engine and of the position of the throttle, said neural network generating said intermediate signal also in function of said moving averages of said speed of the engine and of the position of the throttle.

6. The estimator of claim 4 or 5, wherein said enabling/disabling unit (EDGE DETECTOR) enables and disables the device when the crank angle of the engine is -360 degrees and -140 degrees, respectively.

7. A feedforward controller of an internal combustion engine generating a feedforward signal representing durations of fuel injection ($I_{FF}$) in a cylinder of the engine, comprising:

an estimator of claim 5 or 6 generating a mass air flow signal representative of the estimated inlet air flow of a cylinder of said engine;

a logic unit input with said mass air flow signal, generating said feedforward signal the level of which corresponds to the level established by a look-up table stored therein in correspondence of the current speed of the engine and of the current value of said mass air flow signal.

8. A feedforward-and-feedback control system of a single cylinder internal combustion engine, comprising

a feedforward controller of claim 7 generating a feedforward signal representing durations of fuel injection ($I_{FF}$);

a lambda sensor (LAMBDA SENSOR) generating a signal representing the air/fuel ratio of said engine;

a feedback controller generating a feedback signal representing duration of fuel injection ($I_{FB}$) in function of the difference between the signal output by the lambda sensor (LAMBDA SENSOR) and a reference value, in order to nullify said difference;

an adder of said feedforward and feedback signals representing duration of fuel injection ($I_{FF}$, $I_{FB}$), generating a fuel injection control signal of a cylinder of said engine.

9. A feedforward-and-feedback control system of a multi-cylinder internal combustion engine, comprising

a plurality of feedforward controllers of claim 7, one for each cylinder of the engine, each generating a feedforward signal representing durations of fuel injection ($I_{FF}$) of each cylinder;

a lambda sensor (LAMBDA SENSOR) generating a signal representing the air/fuel ratio of said engine;

a plurality of feedback controllers, one for each cylinder, each generating a feedback signal representing duration of fuel injection ($I_{FB}$) in function of the difference between the signal output by the lambda sensor (LAMBDA SENSOR) and a reference value, in order to nullify said difference;

as many adders of said feedforward and feedback signals, representing durations of fuel injection ($I_{FF}$, $I_{FB}$), each generating a fuel injection control signal of a respective cylinder of said engine.

10. A computer program comprising a software code loadable into the internal memory of a computer for carrying out the method steps of one of claims 1 or 2 when said code is executed by said computer.

**Patentansprüche**

1. Verfahren zum Schätzen der Einlaßluftmenge in eine Brennkammer eines Verbrennungsmotors, das die Schritte aufweist

Abtasten des Drucks in mindestens der Brennkammer eines Zylinders des Motors, wobei ein Zylinderdrucksignal erzeugt wird,

Erzeugen eines Signals, das für die Einlaßluftmenge in der Brennkammer repräsentativ ist, als Funktion des Zylinderdrucksignals,

**dadurch gekennzeichnet, daß** es die Schritte aufweist Bereitstellen einer lernenden Maschine, die in Soft-Computing-Techniken verwirklicht ist, zum Erzeugen eines Ausgangssignals als Funktion mindestens eines Eingangssignals;

Trainieren der lernenden Maschine zum Reproduzieren der Funktion eines physikalischen Luftmassenmessers;

Extrahieren charakteristischer Parameter des Drucksignals;

Erzeugen eines Signals, das für die Einlaßluftmenge in der Brennkammer repräsentativ ist, als Funktion der charakteristischen Parameter mittels der trainierten lernenden Maschine.

2. Verfahren nach Anspruch 1, wobei in die lernende Maschine Signale, die die Position einer Drosselklappe des Motors, die Drehzahl des Motors, die Winkelposition der Antriebswelle des Motors repräsentieren, und das Zylinderdrucksignal eingegeben werden.

3. Schätzer der Einlaßluftmenge in eine Brennkammer eines Zylinders eines Verbrennungsmotors, der aufweist:

einen Drucksensor, der ein Drucksignal des Drucks in mindestens der Brennkammer eines Zylinders des Motors erzeugt,

**dadurch gekennzeichnet, daß** er ferner aufweist

eine offline trainierte lernende Maschine, die in Soft-Computing-Techniken verwirklicht ist und in die mindestens das Zylinderdrucksignal eingegeben wird, die ein Signal, das für die Einlaßluftmenge in der Brennkammer des Motors repräsentativ ist, als Funktion charakteristischer Parameter davon und charakteristischer Parameter des Drucksignals erzeugt.

4. Schätzer nach Anspruch 3, wobei die lernende Maschine aufweist:

eine Freigabe-/Sperreinheit (EDGE DETECTOR), um die Vorrichtung nur freizugeben, wenn die Winkelposition des Motors in einem bestimmten, vorher festgelegten Bereich liegt, dessen Extremwerte der Anfangsposition und der Endposition einer Ansaugphase entsprechen;

einen Vorprozessor (PRE-PROC) in Kaskade mit der Freigabe-/Sperreinheit (EDGE DETECTOR), der ein Signal erzeugt, das einen gleitenden Mittelwert mindestens der charakteristischen Parameter des Drucksignals repräsentiert;

ein neuronales Netzwerk in Kaskade mit dem Vorprozessor, das ein Zwischensignal erzeugt, das die Einlaßluftmenge anzeigt;
einen Nachprozessor (POST-PROC), in den das Zwischensignal eingegeben wird, der das Signal, das für die geschätzte Einlaßluftmenge des Zylinders repräsentativ ist, als einen gleitenden Mittelwert des Zwischensignals erzeugt.

5.  Schätzer nach Anspruch 4, in den Signale, die die Drehzahl des Motors, die Position einer Drosselklappe, die Winkelposition des Motors repräsentieren, und das Zylinderdrucksignal eingegeben werden, wobei der Vorprozessor (PRE-PROC) ferner Signale erzeugt, die gleitende Mittelwerte der Drehzahl des Motors und der Position der Drosselklappe repräsentieren, wobei das neuronale Netzwerk das Zwischensignal auch als Funktion der gleitenden Mittelwerte der Drehzahl des Motors und der Position der Drosselklappe erzeugt.

6.  Schätzer nach Anspruch 4 oder 5, wobei die Freigabe-/ Sperreinheit (EDGE DETECTOR) die Vorrichtung freigibt und sperrt, wenn der Kurbelwinkel des Motors -360 Grad bzw. -140 Grad beträgt.

7.  Vorwärtsregler eines Verbrennungsmotors, der ein Vorwärtsregelsignal erzeugt, das die Dauer der Kraftstoffeinspritzung ($I_{FF}$) in einen Zylinder des Motors repräsentiert, der aufweist:

    einen Schätzer nach Anspruch 5 oder 6, der ein Luftmassenstromsignal erzeugt, das für die geschätzte Einlaßluftmenge eines Zylinders des Motors repräsentativ ist;
    eine Logikeinheit, in die das Luftmassenstromsignal eingegeben wird, die das Vorwärtsregelsignal, dessen Pegel dem Pegel entspricht, der durch eine darin gespeicherte Nachschlagtabelle festgelegt wird, gemäß der gegenwärtigen Drehzahl des Motors und des gegenwärtigen Werts des Luftmassenstromsignals erzeugt.

8.  Vorwärts-und-Rückkopplungsregelsystem eines Einzylinderverbrennungsmotors, das aufweist
    einen Vorwärtsregler nach Anspruch 7, der ein Vorwärtsregelsignal erzeugt, das die Dauer der Kraftstoffeinspritzung ($I_{FF}$) repräsentiert;
    eine Lambdasonde (LAMBDA SENSOR), die ein Signal erzeugt, das das Luft-/Kraftstoffverhältnis des Motors repräsentiert;
    einen Rückkopplungsregler, der ein Rückkopplungssignal erzeugt, das die Dauer der Kraftstoffeinspritzung ($I_{FB}$) als Funktion der Differenz zwischen dem durch die Lambdasonde (LAMBDA SENSOR) ausgegebenen Signal und einem Bezugswert repräsentiert, um die Differenz aufzuheben;
    einen Addierer der Vorwärtsregel- und Rückkoppliungssignale, die die Dauer der Kraftstoffeinspritzung ($I_{FF}$, $I_{FB}$) repräsentieren, der ein Kraftstoffeinspritzungsregelsignal eines Zylinders des Motors erzeugt.

9.  Vorwärts-und-Rückkopplungsregelsystem eines Mehrzylinderverbrennungsmotors, das aufweist
    mehrere Vorwärtsregler nach Anspruch 7, einen für jeden Zylinder des Motors, die jeweils ein Vorwärtsregelsignal erzeugen, das die Dauer der Kraftstoffeinspritzung ($I_{FF}$) jedes Zylinders repräsentiert;
    eine Lambdasonde (LAMBDA SENSOR), die ein Signal erzeugt, das das Luft-/Kraftstoffverhältnis des Motors repräsentiert;
    mehrere Rückkopplungsregler, einen für jeden Zylinder, die jeweils ein Rückkopplungssignal erzeugen, das die Dauer der Kraftstoffeinspritzung ($I_{FB}$) als Funktion der Differenz zwischen dem durch die Lambdasonde (LAMBDA SENSOR) ausgegebenen Signal und einem Bezugswert repräsentiert, um die Differenz aufzuheben;
    ebenso viele Addierer der Vorwärtsregel- und Rückkopplungssignale, die die Dauer der Kraftstoffeinspritzung ($I_{FF}$, $I_{FB}$) repräsentieren, die jeweils ein Kraftstoffeinspritzungsregelsignal eines jeweiligen Zylinders des Motors erzeugen.

10. Computerprogramm, das einen Softwarecode aufweist, der in den internen Speicher eines Computers ladbar ist, zur Ausführung der Verfahrensschritte eines der Ansprüche 1 oder 2, wenn der Code durch den Computer ausgeführt wird.

**Revendications**

1.  Procédé d'estimation d'un flux d'air entrant dans une chambre de combustion d'un moteur à combustion interne, comprenant les étapes suivantes :

    détecter la pression au moins dans la chambre de combustion d'un cylindre du moteur, générant ainsi un signal de pression de cylindre,

générer un signal représentatif du flux d'air entrant dans la chambre de combustion en fonction du signal de pression de cylindre,
**caractérisé en ce qu'**il comprend les étapes suivantes :

prévoir une machine à apprentissage réalisée à l'aide de techniques de calcul par logiciel pour générer un signal de sortie en fonction d'au moins un signal d'entrée ;
former la machine à apprentissage pour reproduire le fonctionnement d'un capteur physique de flux d'air massique ;
extraire des paramètres caractéristiques du signal de pression ;
générer un signal représentatif du flux d'air entrant dans la chambre de combustion en fonction des paramètres caractéristiques en utilisant la machine à apprentissage formée.

2. Procédé selon la revendication 1, dans lequel on introduit dans la machine à apprentissage des signaux représentant la position d'un papillon du moteur, la vitesse du moteur, la position angulaire de l'arbre de transmission du moteur, et le signal de pression de cylindre.

3. Estimateur de flux d'air entrant dans une chambre de combustion d'un cylindre d'un moteur à combustion interne, comprenant :

un capteur de pression générant un signal de pression de la pression dans au moins ladite chambre de combustion d'un cylindre du moteur,
**caractérisé en ce qu'**il comprend en outre
une machine à apprentissage formée hors-ligne à l'aide de techniques de calcul par logiciel et dans laquelle on introduit au moins le signal de pression de cylindre, générant un signal représentatif du flux d'air entrant dans la chambre de combustion du moteur en fonction de paramètres caractéristiques de celui-ci et de paramètres caractéristiques du signal de pression.

4. Estimateur selon la revendication 3, dans lequel la machine à apprentissage comprend :

une unité d'activation/désactivation (EDGE DETECTOR) pour activer le dispositif seulement lorsque la position angulaire du moteur est comprise dans une certaine plage préétablie dont les valeurs extrêmes correspondent à la position de départ et la position de fin d'une phase d'aspiration ;
un préprocesseur (PRE-PROC) en cascade avec l'unité d'activation/désactivation (EDGE DETECTOR), générant un signal représentant une moyenne mobile au moins des paramètres caractéristiques du signal de pression ;
un réseau neuronal en cascade avec le préprocesseur, générant un signal intermédiaire indicatif du flux d'air entrant ;
un post-processeur (POST-PROC) recevant en entrée le signal intermédiaire, générant le signal représentatif du flux d'air entrant estimé du cylindre en tant que moyenne mobile du signal intermédiaire.

5. Estimateur selon la revendication 4, recevant en entrée des signaux représentant la vitesse du moteur, la position d'un papillon, la position angulaire du moteur et le signal de pression de cylindre, le préprocesseur (PRE-PROC) générant en outre des signaux représentant des moyennes mobiles de la vitesse du moteur et de la position du papillon, le réseau de neurones générant le signal intermédiaire aussi en fonction des moyennes mobiles de la vitesse du moteur et de la position du papillon.

6. Estimateur selon la revendication 4 ou 5, dans lequel l'unité d'activation/désactivation (EDGE DETECTOR) active et désactive le dispositif lorsque l'angle de vilebrequin du moteur est de -360 degrés et -140 degrés, respectivement.

7. Contrôleur à commande directe d'un moteur à combustion interne générant un signal de commande directe représentant des durées d'injection de carburant ($I_{FF}$) dans un cylindre du moteur, comprenant :

un estimateur selon les revendications 5 ou 6 générant un signal de flux d'air massique représentatif du flux d'air entrant estimé d'un cylindre du moteur ;
une unité logique recevant en entrée le signal de flux d'air massique, générant le signal de commande directe dont le niveau correspond au niveau établi par une table de correspondance mémorisée dans celle-ci en fonction de à vitesse courante du moteur et de la valeur courante du signal de flux d'air massique.

**8.** Système à commande directe et à contre-réaction d'un moteur à combustion interne à un seul cylindre, comprenant :

un contrôleur à commande directe selon la revendication 7 générant un signal de commande directe représentant des durées d'injection de carburant ($I_{FF}$) ;
un capteur lambda (LAMBDA SENSOR) générant un signal représentant le rapport air/carburant du moteur ;
un contrôleur de contre-réaction générant un signal de contre-réaction représentant une durée d'injection de carburant ($I_{FB}$) en fonction de la différence entre le signal fourni par le capteur lambda (LAMBDA SENSOR) et une valeur de référence, afin d'annuler ladite différence ;
un additionneur des signaux de commande directe et de contre-réaction représentant une durée d'injection de carburant ($I_{FF}$, $I_{FB}$), générant un signal de commande d'injection de carburant d'un cylindre du moteur.

**9.** Système à commande directe et à contre-réfaction d'un moteur à combustion interne à cylindres multiples, comprenant :

une pluralité de contrôleurs à commande directe selon la revendication 7, un pour chaque cylindre du moteur, chacun générant un signal de commande directe représentant des durées d'injection de carburant ($I_{FF}$) de chaque cylindre ;
un capteur lambda (LAMBDA SENSOR) générant un signal représentant le rapport air/carburant du moteur ;
une pluralité de contrôleurs de contre-réaction, un pour chaque cylindre, chacun générant un signal de contre-réaction représentant une durée d'injection de carburant ($I_{FB}$) en fonction de la différence entre le signal fourni par le capteur lambda (LAMBDA SENSOR) et une valeur de référence, afin d'annuler ladite différence ;
autant d'additionneurs que lesdits signaux de commande directe et de contre-réaction, représentant des durées d'injection de carburant ($I_{FF}$, $I_{FB}$), chacun générant un signal de commande d'injection de carburant d'un cylindre respectif du moteur.

**10.** Programme d'ordinateur comprenant des codes de logiciel chargeables dans la mémoire interne d'un ordinateur pour exécuter les étapes de procédé de l'une quelconque des revendications 1 ou 2 lorsque le code est exécuté par l'ordinateur.

FIG. 1

FIG. 2

FIG. 3

FIG. 4

Comparison between MAF measured and MAF estimated

**FIG. 5**

Comparison between MAF measured and MAF estimated

**FIG. 6**

FIG. 7

FIG. 8

FIG. 9

FIG. 10

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 05425121 A

**Non-patent literature cited in the description**

- **HEYWOOD, J.B.** Internal combustion engine fundamentals. McGraw -Hill Book Co, 1988
- **BARBARISI, O. ; DI GAETA, A. ; GLIELMO, L. ; SANTINI, S.** An Extended Kalman Observer for the In-Cylinder Air Mass Flow Estimation. *MECA02 International Workshop on Diagnostics in Automotive Engines and Vehicles,* 2001
- **GRIZZLE, J.W. ; COOKYAND, J.A. ; MILAM, W.P.** Improved Cylinder Air Charge Estimation for Transient Air Fuel Ratio Control. *Proceedings of American Control Conference,* 1994
- **JANKOVIC, M. ; MAGNER, S.W.** Air Charge Estimation and Prediction in Spark Ignition Internal Combustion Engines. *Proceedings of the American Conference, San Diego, California,* June 1999
- **STOTSKY, I. ; KOLMANOVSKY, A.** Application of input estimation and control in automotive engines. *Control Engineering Practice,* 2002, vol. 10, 1371-1383
- **SELLNAU, M.C. ; MATEKUNAS, F.A. ; BATTISTON, P.A. ; CHANG, C.F. ; LANCASTER, D.R.** Cylinder-Pressure-Based Engine Control Using Pressure-Ratio-Management and Low-Cost Non-Intrusive Cylinder Pressure Sensors. *SAE paper 2000-01-0932,* 2000
- **POWELL, J.D.** Engine control using cylinder pressure: Past, present and future. *Journal of Dynamic Systems, Measurement and Control,* 1993, vol. 115 (2B
- **HAYKIN, S.** Neural Networks: A comprehensive Foundation. Prentice Hall International, 1999

- **CRAVEN, P. ; WAHBA, G.** Smoothing noisy data with spline functions: Estimating the correct degree of smoothing by the method of generalized crossvalidation. *Numerische Mathematik,* 1979, vol. 31, 377-403
- **VAPNIK, V.N.** An overview of Statistical Learning Theory. *IEEE Trans. On Neural Networks,* 1999, vol. 9
- **EBERHART, R. C. ; KENNEDY, J.** A new optimizer using particle swarm theory. *Proceedings of the sixth international symposium on micro machine and human science,* 1995, 39-43
- **CESARIO, N. ; DI MEGLIO, M. ; PIROZZI, F.** Realization of a Virtual Lambda Sensor on a Fixed Precision System. *IEEE Proceedings of the DATE05 (Design, Automation and Test in Europe) International Conference - Designer's Forum*
- **PIROZZI, F. ; CESARIO, N. ; LAVORGNA, M.** Modelling On-Off Virtual Lambda Sensors based on Multi-Spread Probabilistic Neural Networks. *10th IEEE International Conference on Emerging Technologies and Factory Automation (ETFA05,* 19 September 2005
- **CESARIO, N. ; DI MEGLIO, M. ; PIROZZI, F. ; MOSELLI, G. ; TAGLIALATELA, F. ; CARPENTIERI, F.** Air/Fuel Control System in SI Engines based on a Virtual Lambda Sensor'', SAE-ICE2005 7-th International Conference On Engine for Automobiles. *SAE paper 2005-24-058,* 2005
- **TAGLIALATELA, F. ; MOSELLI, G. ; LAVORGNA, M.** Engine Knock Detection and Control Using In-Cylinder Pressure Cycle and Soft Computing Techniques. *SAE-ICE2005 2005 7-th International Conference On Engine for Automobiles, SAE paper 2005-24-061,* 2005